# EUROPEAN PATENT APPLICATION

(11) **EP 3 193 435 A1**
(43) Date of publication of application: **19.07.2017**
(21) Application number: 16206326.7
(22) Date of filing: 22.12.2016
(51) Int. Cl.: H02K 15/03, H02K 1/27

(54) **INTERIOR PERMANENT MAGNET ROTOR UNIT**

(30) Priority: 25.12.2015 JP 2015255199
(71) Applicant: JTEKT CORPORATION, Osaka-shi, Osaka 542-8502 (JP)
(72) Inventor: KANDA, Naotake, Osaka-shi, Osaka 542-8502 (JP); YOSHIKAWA, Hiroshi, Osaka-shi, Osaka 542-8502 (JP); TAKEUCHI, Taiki, Osaka-shi, Osaka 542-8502 (JP); SHIBATA, Yoshiyuki, Osaka-shi, Osaka 542-8502 (JP)
(74) Representative: Winter, Brandl, Fürniss, Hübner, Röss, Kaiser, Polte - Partnerschaft mbB

(57) **Abstract**

An object is to provide an interior permanent magnet rotor unit that allows possible demagnetization to be suppressed regardless of a material for a portion of a permanent magnet, which is positioned on an outward side in a radial direction of a core. A core is a laminate of first thin-plate-like members 32 and second thin-plate-like members 34. The first thin-plate-like members 32 and the second thin-plate-like members 34 have first insertion slots 36 and second insertion slots 38 each of which is filled with a permanent magnet 40. In the first thin-plate-like members 32, a separating portion 39 is formed at an end of each of the first insertion slots 36 or the second insertion slots 38, which end is located on an outward side of the insertion slot in a radial direction Dr, to form a slit in the corresponding permanent magnet 40.

## Description

### INCORPORATION BY REFERENCE

The disclosure of Japanese Patent Application No. 2015-255199 filed on Dec. 25, 2015 including the specification, drawings and abstract, is incorporated herein by reference in its entirety.

### BACKGROUND OF THE INVENTION

### 1. Field of the Invention

The invention relates to an interior permanent magnet rotor unit including a core in which thin-plate-like members formed of a magnetic material are laminated and permanent magnets embedded in the core; one or more interior permanent magnet rotor units are coupled together in an axial direction of the core to form a rotor.

### 2. Description of the Related Art

For example, Japanese Patent Application Publication No. 2015-133839 (JP 2015-133839 A) describes a rotor filled with permanent magnets each having a U shape that is open outward in a radial direction of a core in a section orthogonal to an axial direction of the core. A sintered magnet is contained in a portion of each permanent magnet that is located on the outward side of the core in the radial direction. A bond magnet is contained in the remaining portion of the permanent magnet, which is located on an inward side in the radial direction of the core. This configuration is used because diamagnetic fields from a stator are likely to concentrate at the outward side of the U-shaped magnet in the radial direction, so that, when containing a bonded magnet, this part is likely to be demagnetized.

Therefore, for the rotor as described above, the radially outer portion of the permanent magnet needs to be distinguished from the remaining portion of the permanent magnet and to contain a magnet that is less likely to be demagnetized.

### SUMMARY OF THE INVENTION

An object of the invention is to provide an interior permanent magnet rotor unit that allows possible demagnetization to be suppressed regardless of a material for a portion of a permanent magnet, which is positioned on an outward side in a radial direction of a core.

An interior permanent magnet rotor unit in an aspect of the invention includes a single core or a plurality of the cores coupled together in an axial direction of the core, and permanent magnets embedded in the core. The core includes thin-plate-like members formed of a magnetic material and laminated together. The core is provided with first insertion slots and second insertion slot each of which passes through the core in a direction intersecting a plane orthogonal to the axial direction, the first insertion slots each being filled with the permanent magnet forming a particular magnetic pole, the second insertion slots each being filled with the permanent magnet forming the particular magnetic pole. The permanent magnet in each of the first insertion slots faces the permanent magnet in the corresponding second insertion slot in a circumferential direction of the core, and portions of the permanent magnets that face each other form the particular magnetic pole. The thin-plate-like members include a first thin-plate-like member including separating portions for the first insertion slots each of which allows formation of a slit at an end of the permanent magnet packed in the corresponding first insertion slot, the end being located on an outward side in a radial direction of the core, and a second thin-plate-like member that does not include the separating portions. The slit extends in a direction in which a distance between the slit and a central portion of the particular magnetic pole increases toward the outward side in the radial direction, and the separating portion has a higher permeability than the permanent magnet.

In this aspect, the particular magnetic pole is provided by those portions of the permanent magnet in each first insertion slot and the permanent magnet in the corresponding second insertion slot which face each other in the circumferential direction. Thus, an orientation direction of the permanent magnet packed in the first insertion slot is similar to the circumferential direction of the core. A stator applies magnetic fields to the core in a direction similar to direction orthogonal to the circumferential direction. Due to the magnetic fields from the stator, the magnet flux density of magnetic fluxes entering or exiting each permanent magnet is likely to be higher on the outward side than on the inward side in the radial direction of the core. Thus, when the stator applies strong magnetic fields, strong magnetic fields are applied, in the direction intersecting the orientation direction, to the end of permanent magnet packed in the first insertion slot, which end is located on the outward side of in the radial direction the core. As a result, there is a possibility that demagnetization occurs at that end.

In the above-described aspect, the slit is formed at that end of each permanent magnet packed in the first insertion slot which is located on the outward side of the core in the radial direction. The slit extends in the direction intersecting the circumferential direction, which is similar to the direction in which the stator applies the magnetic field. Since each separating portion forming the slit has a higher permeability than the permanent magnet, magnetic fluxes resulting from the magnetic fields applied by the stator are more likely to pass through the separating portion than through the permanent magnet until the separating portion is magnetically saturated. This allows prevention of application of magnetic fields in a direction different from the orientation direction to the end of the permanent magnet packed in the first insertion slot, which end is located on the outward side in the radial direction of the core. Therefore, possible demagnetization can be suppressed regardless of a material for a portion of the permanent magnet, which is positioned on the outward side in the radial direction of the core.

In the interior permanent magnet rotor unit in the above-described aspect, the thin-plate-like members may include a third thin-plate-like member including separating portions for the second insertion slots each of which allows formation of a slit at an end of the permanent magnet packed in the corresponding second insertion slot, which end is located on the outward side in the radial direction, and a fourth thin-plate-like member that does not include the separating portions. Each of the slits included in the third thin-plate-like member may extend in a direction in which a distance between the slit and the central portion of the particular magnetic pole increases toward the outward side in the radial direction, and each of the separating portions forming the slit may have a higher permeability than the permanent magnet. The third thin-plate-like member may be the first thin-plate-like member or the second thin-plate-like member, and the fourth thin-plate-like member may be the first thin-plate-like member or the second thin-plate-like member.

This restrains application of magnetic fields in a direction different from the orientation direction to the end of the permanent magnet packed in the second insertion slot, which end is located on the outward side in the radial direction of the core. Consequently, the particular magnetic pole can further be restrained from being demagnetized.

In the above-described aspect, each of the first insertion slots may include a protruding portion located at the end of the first insertion slot on the outward side in the radial direction of the core and protruding toward the central portion of the particular magnetic pole in the circumferential direction of the core, and each of the second insertion slots may include a protruding portion located at the end of the second insertion slot on the outward side in the radial direction of the core and protruding toward the central portion of the particular magnetic pole in the circumferential direction of the core.

In the above-described aspect, the length of the radially outward end of a permanent magnet in the orientation direction is larger in the permanent magnets packed in the first insertion slots in the second thin-plate-like member and the permanent magnets packed in the second insertion slots in the fourth thin-plate-like member than in permanent magnets with no protruding portion. This allows possible demagnetization to be suppressed.

In the above-described aspect, a tip portion of the protruding portion may be rounded. The above-described aspect, in which the tip portion of the protruding portion is rounded, allows stress concentration at the tip portion to be relieved compared to the case where the tip portion is pointed. Furthermore, when the first insertion slots and the second insertion slots are filled with a mixture of magnetic powder and resin as a magnet material, the magnet material can be easily spread to the tip portion.

In the above-described aspect, the permanent magnet may be a magnetized mixture of resin and magnetic powder. Since the mixture of resin and magnetic powder is used as the magnet material, even when separated into pieces by the separating portion, each of the first insertion slots or the second insertion slots can be easily filled with the permanent magnet utilizing injection molding or compression molding.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a perspective view depicting a configuration of an interior permanent magnet rotor unit according to a first embodiment;
FIG. 2A is a sectional view of the rotor unit at first thin-plate-like members according to the first embodiment;
FIG. 2B is a sectional view of the rotor unit at the second thin-plate-like members according to the first embodiment;
FIG. 3A is a diagram illustrating the manufacturing process for the rotor unit according to the first embodiment;
FIG. 3B is a diagram illustrating the manufacturing process for the rotor unit according to the first embodiment;
FIG. 4 is a sectional view schematically depicting magnetic fluxes from a stator according to the first embodiment;
FIG. 5A is a sectional view of a rotor unit at first thin-plate-like member according to a second embodiment;
FIG. 5B is a sectional view of the rotor unit at the second thin-plate-like members according to the second embodiment;
FIG. 6A is a sectional view of a rotor unit at first thin-plate-like members according to a variation of the above-described embodiments;
FIG. 6B is a sectional view of the rotor unit at the second thin-plate-like members according to the variation of the above-described embodiments;
FIG. 7A is a sectional view of a rotor unit at first thin-plate-like members according to a variation of the above-described embodiments;
FIG. 7B is a sectional view of the rotor unit at the second thin-plate-like members according to the variation of the above-described embodiments;
FIG. 8A is a sectional view of a rotor unit at first thin-plate-like members according to a variation of the above-described embodiments; and
FIG. 8B is a sectional view of the rotor unit at the second thin-plate-like members according to the variation of the above-described embodiments.

### DETAILED DESCRIPTION OF EMBODIMENTS

A first embodiment of an interior permanent magnet rotor unit in the invention will be described below with reference to the drawings.

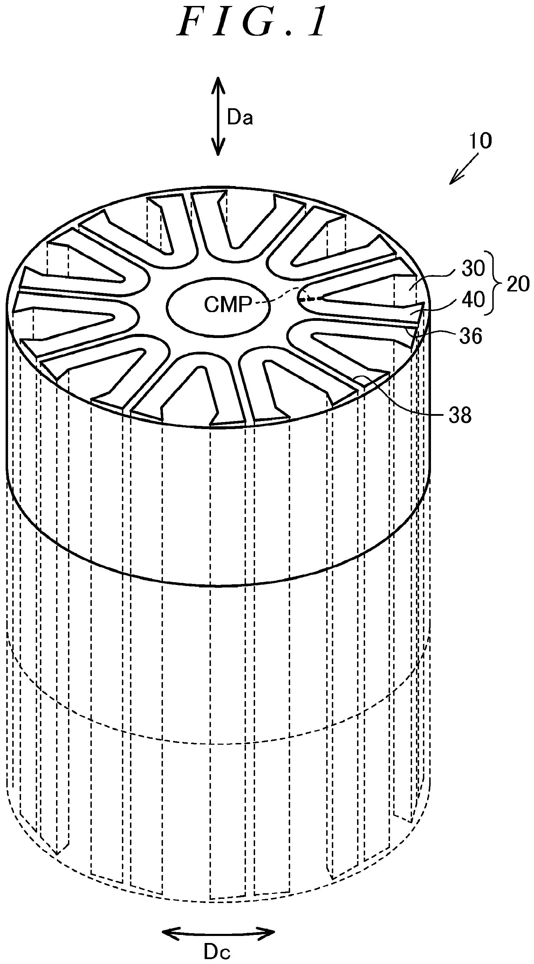

A rotor 10 depicted in FIG. 1 forms an interior permanent magnet synchronous motor (IPMSM). The IPMSM is built into an electric power steering system (EPS). The rotor 10 is shaped like a cylinder. The rotor 10 in the present embodiment includes three interior permanent magnet rotor units (rotor units 20) coupled together in the direction of a rotating shaft (axial direction Da).

The rotor unit 20 includes a core 30 and permanent magnets 40. The core 30 is formed by laminating a plurality of flat rolled electrical steel sheets such as flat rolled silicon steel sheets together. The core 30 includes 10 first insertion slots 36 and 10 second insertion slots 38 each of which penetrates the core in the axial direction Da. The paired first insertion slot 36 and second insertion slot 38 adjacent to each other are connected together at a junction portion CMP and are shaped generally like a letter U in a section orthogonal to the axial direction Da. Pairs each of the first insertion slot 36 and the second insertion slot 38 adjacent to each other are evenly arranged in a circumferential direction Dc of the core 30. A permanent magnet 40 is embedded in the pair of the first insertion slot 36 and the second insertion slot 38 adjacent to each other. The permanent magnet 40 is manufactured by injection molding using a mixture of magnetic powder and resin as a magnet material.

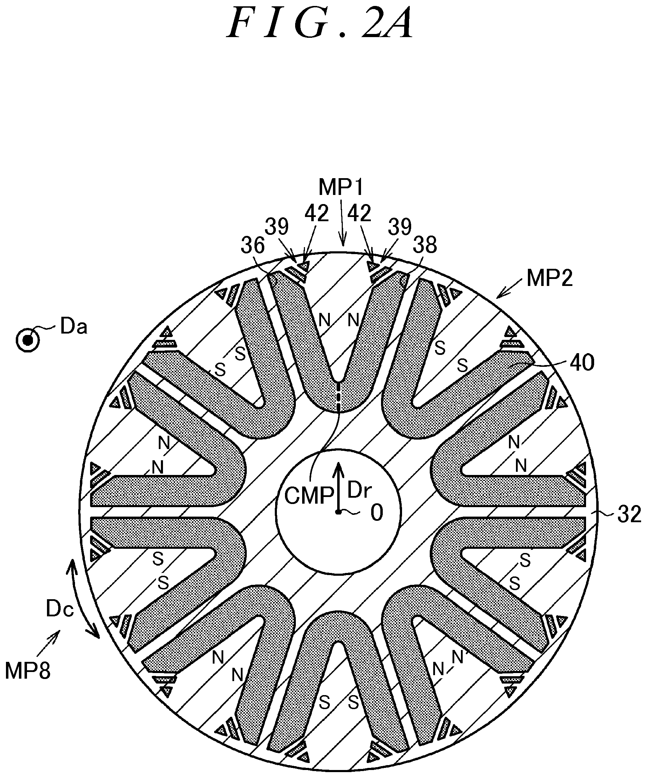

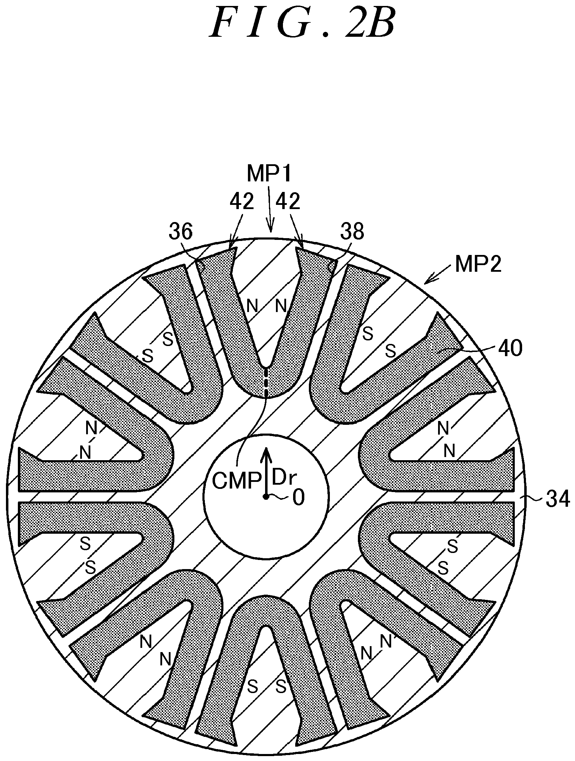

FIG. 2A depicts a sectional view of the rotor unit 20 at first thin-plate-like members 32 included in the core 30. FIG. 2B depicts a sectional view of the rotor unit 20 at second thin-plate-like members 34 included in the core 30. The core 30 is a laminate of the first thin-plate-like members 32 and the second thin-plate-like members 34. Specifically, for example, one or more laminates of the first thin-plate-like members 32 and one or more laminates of the second thin-plate-like members 34 are alternately laid on top of one another. However, the number of the consecutively laminated first thin-plate-like members 32 (the number may be one) and the number of the consecutively laminated second thin-plate-like members 34 (the number may be one) are not mandatory to be constant at any position in the axial direction Da. The first thin-plate-like members 32 and the second thin-plate-like members 34 are all flat rolled electrical steel sheets.

As depicted in FIGS. 2A and 2B, each first insertion slot 36 and the corresponding second insertion slot 38 form a pair of insertion slots filled with the permanent magnet 40 and providing a single magnetic pole MP1, MP2 and are formed so as to gradually become closer to each other as the insertion slots extend inward in the radial direction Dr. The radial direction Dr extends radially from a central axis O of the core 30 and varies according to a rotation angle. FIGS. 2A and 2B each depict a direction extending upward from the central axis O in the figure as the radial direction Dr. For the magnetic pole MP1, outward in the radial direction Dr means the radial direction Dr depicted in FIG. 2A, and inward in the radial direction Dr means a direction opposite to the radial direction Dr depicted in FIG. 2A.

Each magnetic pole in the rotor 10 is formed of facing portions of the permanent magnet 40 packed in the paired first insertion slot 36 and second insertion slot 38, with the distance between the slots 36 and 38 decreasing inward in the radial direction Dr. The facing portions face each other in a circumferential direction Dc of the core 30. FIGS. 2 A and 2B each illustrate that the magnetic pole MP1 is an N pole and that the magnetic pole MP2 is an S pole. The circumferential direction Dc is parallel to a velocity at which the rotation angle of the rotor 10 varies, and varies according to the rotation angle. FIG. 2A schematically depicts the circumferential direction Dc of the magnetic pole MP8. In the magnetic pole MP8, the portions of the permanent magnet 40, which face each other in the circumferential direction Dc form the S pole.

As depicted in FIG. 2B, the first insertion slots 36 and the second insertion slots 38 in the second thin-plate-like members 34 each include a protruding portion 42 located at an end of the insertion slot on the outward side of the core 30 in the radial direction Dr and protruding toward a central portion (junction portion CMP) of the magnetic pole in the circumferential direction Dc of the core 30.

Similarly, as depicted in FIG. 2A, the first insertion slots 36 and the second insertion slots 38 in the first thin-plate-like members 32 each include the protruding portion 42 located at the end of the insertion slot on the outward side in the radial direction Dr of the core 30 and protruding toward the central portion of the magnetic pole in the circumferential direction Dc of the core 30. However, the first insertion slots 36 and the second insertion slots 38 in the first thin-plate-like members 32 are each separated into a plurality of pieces at the end of the insertion slot on the outward side in the radial direction Dr by a separating portion 39 that allows formation of a slit in the permanent magnet 40. That is, the permanent magnet 40 packed in each first insertion slot 36 and the corresponding second insertion slot 38 in the first thin-plate-like members 32 is divided into a plurality of pieces at the end of the insertion slot on the outward side in the radial direction Dr by the separating portion 39.

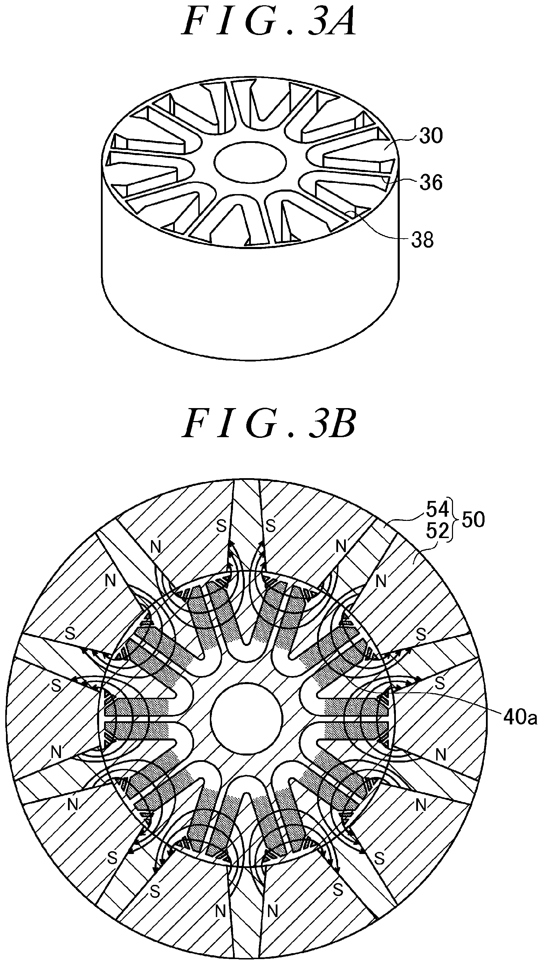

The separating portion 39 extends in a direction intersecting the circumferential direction Dc. Specifically, the separating portion 39 extends in a direction away from the central portion of the corresponding magnetic pole in the circumferential direction Dc as the separating portion 39 extends outward in the radial direction Dr. FIGS. 3A and 3B illustrate a manufacturing process for the rotor unit 20.

FIG. 3A illustrates a lamination step of laminating the first thin-plate-like members 32 and the second thin-plate-like members 34 together to form the core 30. FIG. 3A does not illustrate the separating portions 39 in the first thin-plate-like members 32. However, this does not mean that the length in the axial direction Da is defined only by the consecutively laminated second thin-plate-like members 34. FIG. 3A only schematically illustrates the lamination step.

FIG. 3B illustrates a filling step of filling each of the first insertion slots 36 and the second insertion slots 38 with a magnet material 40a and a magnetization step of magnetizing the magnet material 40a. FIG. 3B depicts a section of the rotor unit 20 at the first thin-plate-like members 32. In the present embodiment, the core 30 is filled with the magnet material 40a, with magnetization apparatuses 50 arranged outward of the core 30 in the radial direction Dr so as to face the core 30, as depicted in FIG. 3B. Thus, the magnet material 40a is magnetized during the filling step. Thus, the filling step and the magnetization step overlap. The present embodiment assumes that filling with the magnet material 40a is performed through the outer ends of the first insertion slots 36 and the second insertion slots 38 in the radial direction Dr. Consequently, FIG. 3B illustrates that inner portions of the first insertion slots 36 and the second insertion slots 38 in the radial direction Dr have not been filled with the magnet material 40a yet.

The magnetization apparatus 50 includes 10 permanent magnets 52 and 10 magnetization yokes 54 alternately arranged in the circumferential direction Dc of the rotor unit 20 and integrally assembled together into the form of a circular ring using a nonmagnetic member not depicted in the drawings. Each of the permanent magnets 52 is arranged outward in the radial direction Dr of the core 30 with respect to the magnet material 40a packed in the corresponding first insertion slot 36 and the corresponding second insertion slot 38 in the core 30. Each permanent magnet 52 has different magnetic poles on the opposite sides of the permanent magnet 52 in the circumferential direction Dc. Every two permanent magnets 52 adjacent to each other in the circumferential direction Dc are arranged such that facing sides of the permanent magnets 52 have the same magnetic pole. Each of the magnetization yokes 54 is sandwiched between the corresponding two adjacent permanent magnets 52 arranged such that the facing sides of the permanent magnets 52 have the same magnetic pole.

In the filling step, the magnet material 40a is heated to a high temperature so as to be fluidized and further packed in the first insertion slots 36 and the second insertion slots 38 under a high pressure. Consequently, the magnet material 40a is injection-molded. In the filling step, the magnet material 40a is also packed in a tip portion of each of the first and second insertion slots 36 and 38 in the first thin-plate-like members 32, which tip portion is divided into pieces by the corresponding separating portion 39.

FIG. 3B schematically illustrate lines of magnetic force. An orientation direction of the permanent magnets 40 manufactured through the magnetization step is a direction in which the lines of magnetic force depicted in FIG. 3B cross the magnet material 40a. The orientation direction as used herein refers to a direction parallel to the direction of a magnetic moment of each permanent magnet 40. In the present embodiment, the orientation direction is a direction parallel to the circumferential direction Dc or a direction similar to that direction as depicted in FIG. 3B. The angle between the orientation direction and the circumferential direction Dc is equal to or smaller than a specified value (for example, 20°).

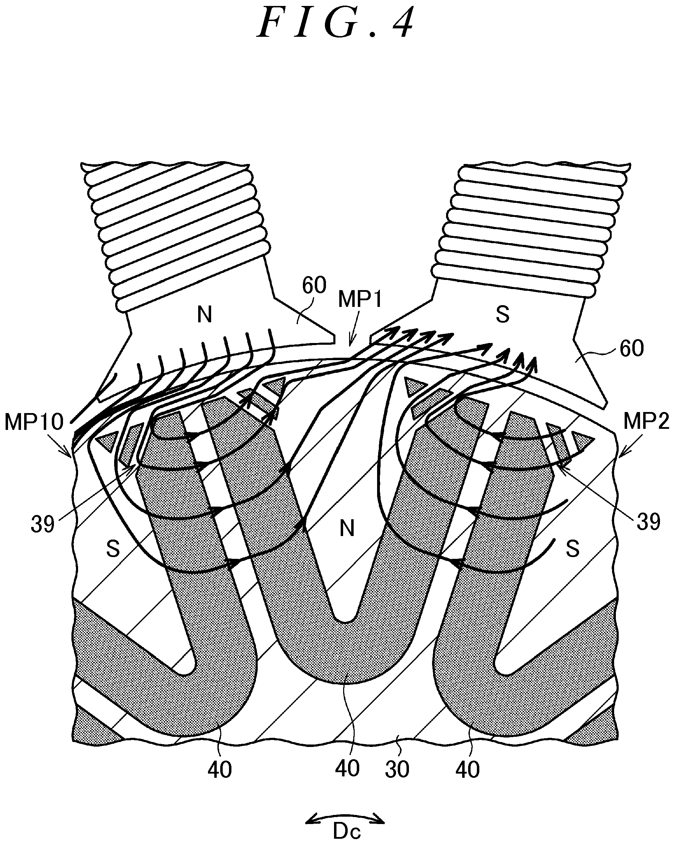

Now, effects of the present embodiment will be described. FIG. 4 schematically depicts magnet fluxes resulting from magnetic fields applied by the stator 60 when the rotor 10 is located facing the stator and used as a synchronous motor. FIG. 4 depicts a section of the rotor 10 at the first thin-plate-like members 32.

On the outward side of the magnetic pole MP10 in the radial direction Dr, magnet fluxes exiting a portion of the stator 60 that corresponds to the N pole are likely to circumvent the permanent magnet 40 and to pass through the separating portion 39 as depicted in FIG. 4 because the flat rolled electrical steel sheet forming the separating portion 39 has a higher permeability than the permanent magnet 40. A direction in which the magnetic fluxes having passed through the separating portion 39 travel through the permanent magnet 40 is similar to the circumferential direction Dc of the core 30. In other words, the direction in which the magnetic fluxes pass through the permanent magnet 40 as a result of the magnetic fields applied by the stator 60 is similar to the orientation direction of the permanent magnet 40.

On the outward side of the magnetic pole MP1 in the radial direction Dr, magnet fluxes entering a portion of the stator 60, which corresponds to the S pole are likely to travel via the separating portion 39 rather than travel outward through the inside of the permanent magnet 40 in the radial direction Dr because the flat rolled electrical steel sheet forming the separating portion 39 has a higher permeability than the permanent magnet 40. Thus, magnetic fluxes entering the portion of the stator 60, which corresponds to the S pole travel through the permanent magnet 40 in a direction similar to the orientation direction.

FIG. 4 depicts a section of the rotor 10 at the first thin-plate-like members 32. Also in a section of the rotor 10 at the second thin-plate-like members 34, the direction in which magnetic fluxes pass through the permanent magnet 40 as a result of magnetic fields applied by the stator 60 is similar to the orientation direction of the permanent magnet 40. This is because the separating portion 39 has a higher permeability than the permanent magnet 40 and thus magnet fluxes passing through the permanent magnet 40 packed in each first insertion slot 36 and the corresponding second insertion slot 38 in the second thin-plate-like members 34 are likely to travel via the corresponding separating portion 39 in the first thin-plate-like members 32.

The above-described present embodiment produces the following effects.
(1) Since the first thin-plate-like members 32 include the separating portions 39, magnetic fields in a direction different from the orientation direction can be restrained from being applied to the end of each permanent magnet 40 located on the outward side in the radial direction of the core 30. Therefore, possible demagnetization can be suppressed regardless of the material of a portion of each permanent magnet 40, which is positioned on the outward side in the radial direction of the core 30.
   Each permanent magnet 40 is shaped to protrude inward in the radial direction Dr, and magnetic fluxes from the stator 60 disperse on the inward side of the core 30 in the radial direction Dr. Thus, a magnetic flux density is lower on the inward side of than on the outward side in the radial direction of the core 30. Thus, demagnetization is less likely to occur even when no separating portion 39 is provided on the inward side in the radial direction of the core 30.
(2) Each of the first insertion slots 36 and the second insertion slots 38 includes the protruding portion 42 located at the end of the insertion slot on the outward side in the radial direction Dr of the core 30 and protruding toward the central portion of the corresponding magnetic pole in the circumferential direction Dc of the core 30. Consequently, the length, in the orientation direction, of the end of a permanent magnet on the outward side in the radial direction Dr is larger in the permanent magnets 40 packed in the first insertion slots 36 and the second insertion slots 38 at the second thin-plate-like members 34 than in permanent magnets with no protruding portion 42. This allows possible demagnetization to be suppressed.
(3) The permanent magnets 40 are formed by injection molding using the mixture of resin and magnetic powder. Consequently, even when each of the first insertion slots 36 and the second insertion slots 38 is separated into pieces by the corresponding separating portion 39, the first insertion slots 36 and the second insertion slots 38 can be easily filled with the permanent magnets 40.

Since the permanent magnets 40 are formed by injection molding, the permanent magnets 40 packed in the first insertion slots 36 in the first thin-plate-like members 32 are coupled to the permanent magnets 40 packed in the first insertion slots 36 in the second thin-plate-like members 34, and the permanent magnets 40 packed in the second insertion slots 38 in the first thin-plate-like members 32 are coupled to the permanent magnets 40 packed in the second insertion slots 38 in the second thin-plate-like members 34. Thus, a centrifugal force applied to the permanent magnets 40 packed in the first insertion slots 36 and the second insertion slot 38 in the second thin-plate-like members 34 is transmitted to the permanent magnets 40 packed in the first insertion slots 36 and the second insertion slot 38 in the first thin-plate-like members 32. The centrifugal force is received by a portion of the first thin-plate-like members 32, which is located outward of the permanent magnets 40 in the radial direction Dr. For a coupling force between the outward side and the inward side of the core 30 in the radial direction Dr with respect to the permanent magnets 40, a stronger force is exerted in the first thin-plate-like members 32, which include the separating portions 39, than in the second thin-plate-like members 34. Therefore, the present embodiment can enhance a strength against the centrifugal force compared to the case where no first thin-plate-like members 32 are provided, with only the second thin-plate-like members 34 included in the core 30.

Now, a second embodiment will be described with reference to the drawings with focus placed on differences from the first embodiment.

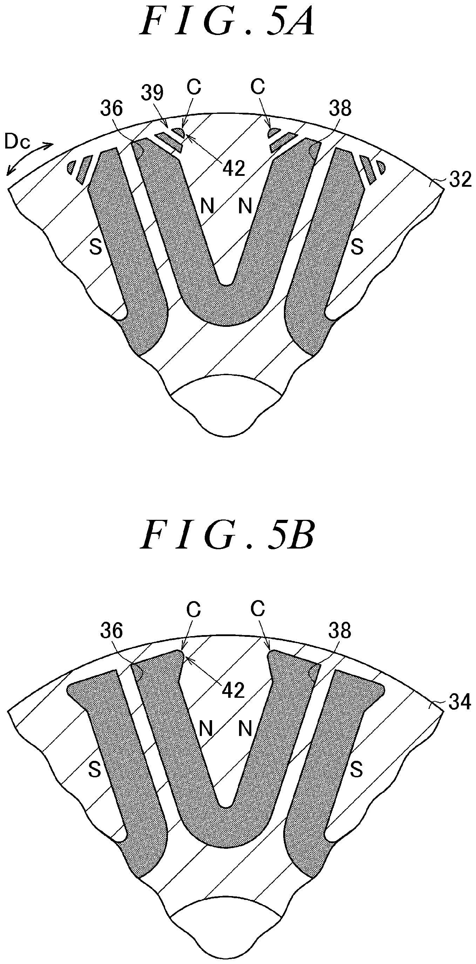

FIG. 5A and FIG. 5B depict a section of a rotor unit 20 according to the present embodiment at the first thin-plate-like members 32 and a section of the rotor unit 20 at the second thin-plate-like members 34. In the present embodiment, a tip portion C of the protruding portion 42 is rounded as depicted in FIGS. 5A and 5B. Consequently, compared to the case where the tip portion is pointed, the present embodiment allows stress concentration at the tip portion C to be relieved. When the first insertion slots 36 or the second insertion slots 38 are filled with the magnet material, the magnet material can be easily spread to the tip portion C.

At least one of the matters in the above-described embodiments may be varied as follows. In the following description, reference numerals and the like may be used to suggest correspondences between the matters described in the SUMMARY OF THE INVENTION section and the matters in the above-described embodiments. However, this does not intend to limit the above-described matters to the illustrated correspondences.

For the permanent magnet forming the particular magnetic pole, in the above-described embodiments, the example in which one permanent magnet forms one magnetic pole in the rotor 10 is illustrated in the sectional views taken at the second thin-plate-like members 34. However, the invention is not limited to this configuration.

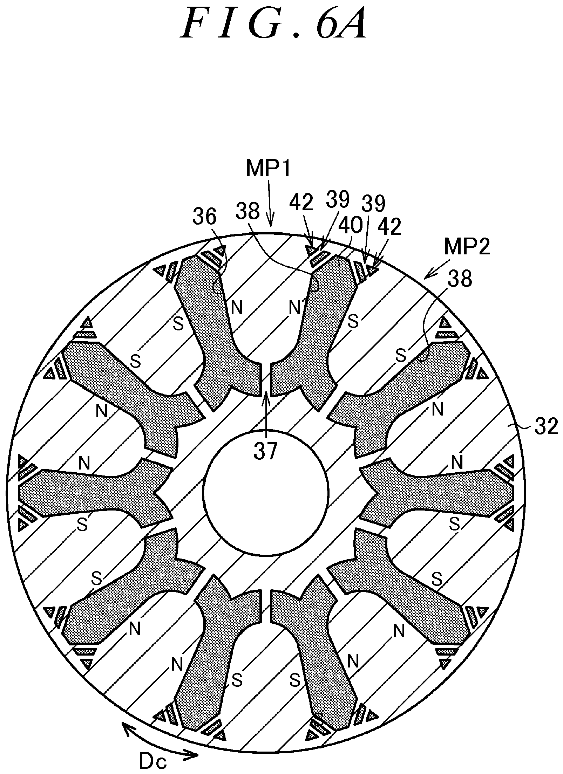

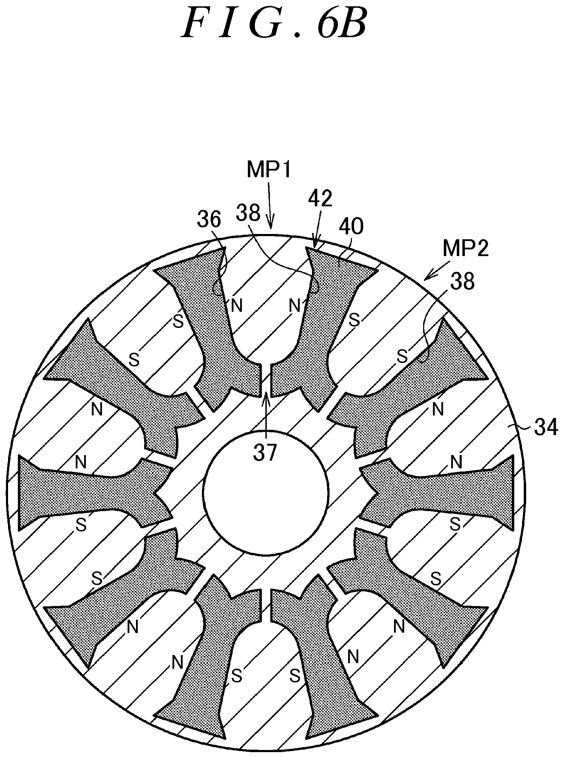

FIGS. 6A and 6B illustrate an example in which one permanent magnet forms a part of two adjacent magnetic poles in the rotor. FIG. 6A and FIG. 6B correspond to FIG. 2A and FIG. 2B. As depicted in FIGS. 6A and 6B, each first insertion slot 36 and the corresponding second insertion slot 38 are separated from each other by a central dividing portion 37 located in the central portion of the corresponding magnetic pole and formed of the first thin-plate-like members 32 or the second thin-plate-like members 34. The permanent magnet 40 packed in each first insertion slot 36 forms a part of two adjacent magnetic poles, for example, a part of the N pole of the magnetic pole MP1 and a part of the S pole of the magnetic pole MP2. In the present embodiment, the protruding portion 42 is formed on each of the opposite sides of each of the first insertion slots 36 and the second insertion slots 38 in the circumferential direction Dc as depicted in FIGS. 6A and 6B. As depicted in FIG. 6A, in the first thin-plate-like members 32, the separating portion 39 is provided in each of the protruding portions 42 located on the opposite sides in the circumferential direction Dc. In the first insertion slot 36 filled with the permanent magnet 40 forming the magnetic pole MP1, the separating portion 39 formed closer to the magnetic pole MP1 extends outward in the radial direction Dr so as to increase the distance between separating portion 39 and the central portion of the magnetic pole MP1 in the circumferential direction Dc. In contrast, the separating portion 39 formed closer to the magnetic pole MP2 extends outward in the radial direction Dr so as to increase the distance between the separating portion 39 and the central portion of the magnetic pole MP2 in the circumferential direction Dc.

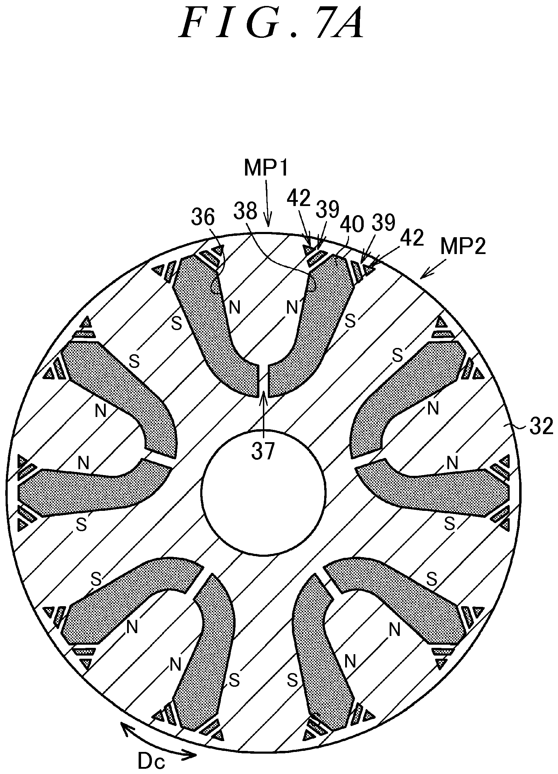

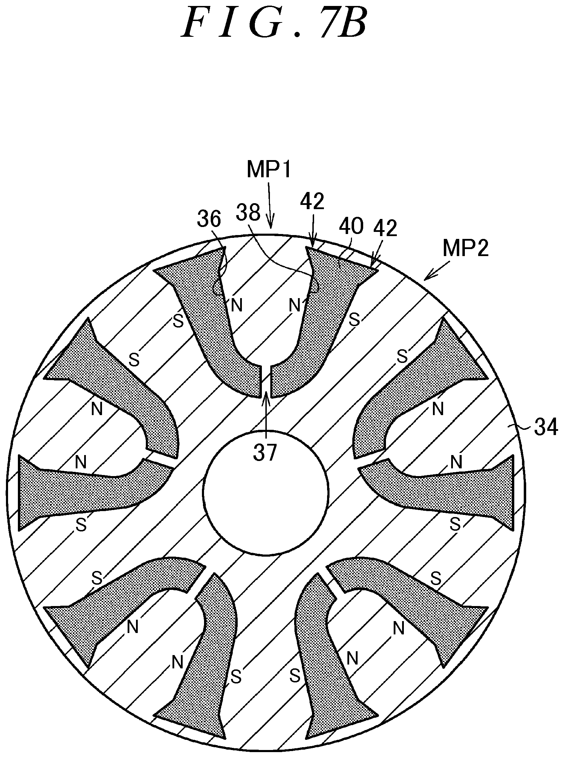

FIGS. 7A and 7B illustrate another example in which one permanent magnet forms a part of two adjacent magnetic poles in the rotor. FIG. 7A and FIG. 7B correspond to FIG. 6A and FIG. 6B. In the example illustrated in FIGS. 7A and 7B, a portion of the permanent magnet 40 that provides the N pole and a portion of the permanent magnet 40 that provides the S pole are not symmetric.

The third thin-plate members and fourth thin-plate members are explained below.IIn the above-described embodiments, the first thin-plate-like members 32 are configured by combining the features of a thin-plate members (third thin-plate members) in which the slits are formed in the permanent magnets 40 packed in the second insertion slots 38 with the features of a thin-plate members (first thin-plate members) in which the slits are formed in the permanent magnets 40 packed in the first insertion slots 36. And the second thin-plate-like members 34 are configured by combining the features of a thin-plate members (fourth thin-plate members) in which no slits are formed in the permanent magnets 40 packed in the second insertion slots 38 with the features of a thin-plate members (second thin-plate members) in which no slits are formed in the permanent magnets 40 packed in the first insertion slots 36. However, the invention is not limited to this configuration.

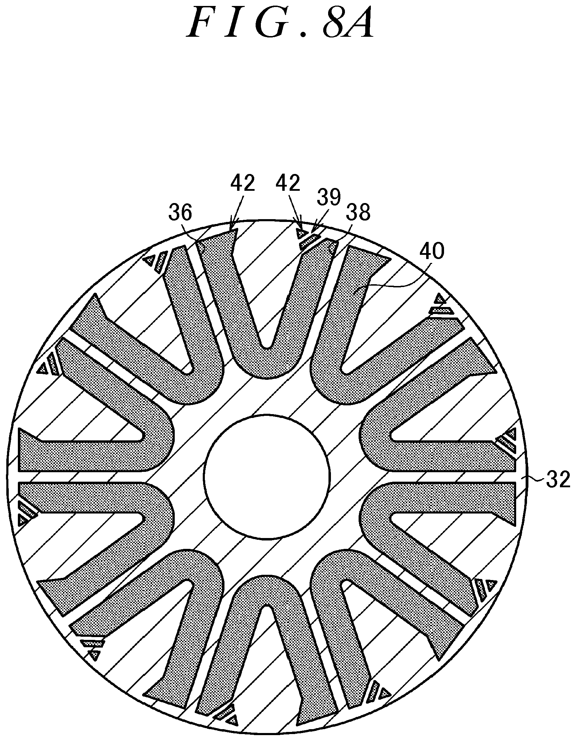

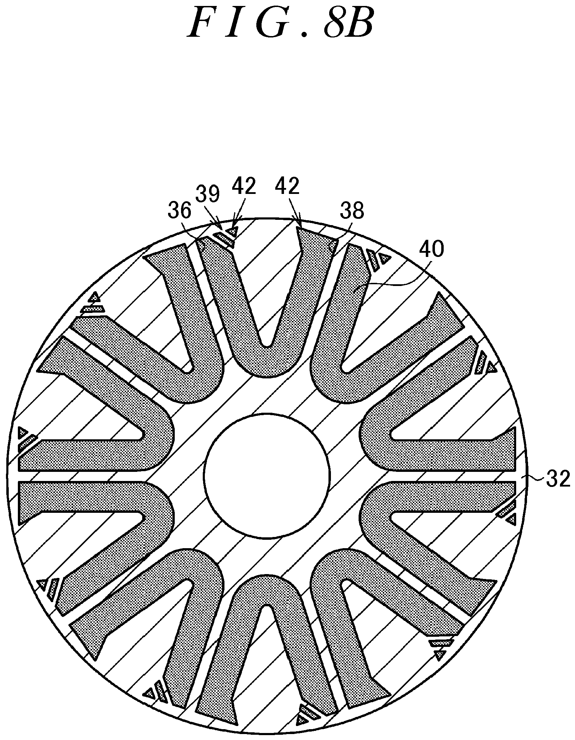

FIG. 8A illustrate an example of the second thin-plate-like members 34 configured by combining the features of the third thin-plate members with the features of the second thin-plate members, and FIG. 8B illustrate an example of the first thin-plate-like members 32 configured by combining the features of the fourth thin-plate members with the features of the first thin-plate members. FIG. 8A and FIG. 8B correspond to FIG. 2A and FIG. 2B respectively.

It is not essential that two types of thin-plate-like members form the core 30. For example, the core 30 may be a laminate of the plate-like members depicted in FIG. 8A and FIG. 8B and the plate-like members depicted in FIG. 2A and FIG. 2B.

The thin-plate-like members are not limited to flat rolled electrical steel sheets. For example, the thin-plate-like members may be formed of Ferrum Casting Ductile (FCD) iron or soft iron. In the above-described embodiments, the first insertion slots 36 and the second insertion slots 38 are formed to extend in the axial direction Da. However, the invention is not limited to this. The first insertion slots 36 and the second insertion slots 38 may extend in a direction that intersects both the axial direction Da and a plane (for example, a surface of the core 30 in FIG. 1) orthogonal to the axial direction Da, so as to penetrate the core 30.

A molding technique for the permanent magnets is not limited to injection molding. For example, compression molding may be used. This may be performed, for example, as follows. That is, a molding guide is first arranged in contact with the core 30. The molding guide has slots with the same shape as that of the first insertion slots 36 and the second insertion slots 38 in FIG. 2B. Thus, each of the slots in the molding guide, the first insertion slots 36 and the second insertion slots 38 is filled with the magnet material. Then, pressure is applied so as to fill the first insertion slots 36 and the second insertion slots 38 with the magnet material in the slots in the molding guide.

The number of magnetic poles is not limited to the value illustrated in the above-described embodiments. In the above-described embodiments, the rotor 10 includes three rotor units 20. However, the invention is not limited to this. The rotor 10 may include two rotor units 20 or four or more rotor units 20, or the rotor 10 may include a single rotor unit 20. A plurality of rotor units 20 in the rotor 10 is particularly effective when magnetic fields are applied not only in the radial direction but also in the axial direction of the rotor units 20 as described in, for example, Japanese Patent Application Publication No. 2014-121116 (JP 2014-121116 A).

The IPMSM is not limited to the one built into the EPS. For example, the IPMSM may be built into a variable-gear steering system. Of course, the IPMSM is not limited to the one built into an actuator that steers steered wheels.

All the sections of the rotor unit 20 in the axial direction Da may be, for example, as depicted in FIG. 2B, FIG. 5B, FIG. 6B, or FIG. 7B. This also keeps the length of the radially outward end of each permanent magnet in the orientation direction large, allowing possible demagnetization to be suppressed.

## Claims

1. An interior permanent magnet rotor unit comprising:
a single core or a plurality of the cores coupled together in an axial direction of the core; and
permanent magnets embedded in the core, wherein,
the core includes thin-plate members formed of a magnetic material and laminated together,
the core is provided with first insertion slots and second insertion slot each of which passes through the core in a direction intersecting a plane orthogonal to the axial direction, the first insertion slots each being filled with the permanent magnet forming a particular magnetic pole, the second insertion slots each being filled with the permanent magnet forming the particular magnetic pole,
the permanent magnet in each of the first insertion slots faces the permanent magnet in the corresponding second insertion slot in a circumferential direction of the core, and portions of the permanent magnets that face each other form the particular magnetic pole,
the thin-plate members include a first thin-plate member including separating portions for the first insertion slots each of which allows formation of a slit at an end of the permanent magnet packed in the corresponding first insertion slot, the end being located on an outward side in a radial direction of the core, and a second thin-plate member that does not include the separating portions, and
the slit extends in a direction in which a distance between the slit and a central portion of the particular magnetic pole increases toward the outward side in the radial direction, and the separating portion has a higher permeability than the permanent magnet.

2. The interior permanent magnet rotor unit according to claim 1, wherein,
a) the thin-plate members include a third thin-plate member including separating portions for the second insertion slots each of which allows formation of a slit at an end of the permanent magnet packed in the corresponding second insertion slot, the end being located on the outward side in the radial direction, and a fourth thin-plate member that does not include the separating portions,
b) each of the slits included in the third thin-plate member extends in a direction in which a distance between the slit and the central portion of the particular magnetic pole increases toward the outward side in the radial direction, and each of the separating portions forming the slit has a higher permeability than the permanent magnet, and
the third thin-plate member is configured by adding the above-described features a) and b) to the first thin-plate member or to the second thin-plate member, and the fourth thin-plate member is configured by adding the above-described features a) to the first thin-plate member or to the second thin-plate member.

3. The interior permanent magnet rotor unit according to claim 2, wherein,
each of the first insertion slots includes a protruding portion located at the end of the first insertion slot on the outward side in the radial direction of the core and protruding toward the central portion of the particular magnetic pole in the circumferential direction of the core, and
each of the second insertion slots includes a protruding portion located at the end of the second insertion slot on the outward side in the radial direction of the core and protruding toward the central portion of the particular magnetic pole in the circumferential direction of the core.

4. The interior permanent magnet rotor unit according to claim 3, wherein,
a tip portion of the protruding portion is rounded.

5. The interior permanent magnet rotor unit according to any one of claims 1 to 4, wherein,
the permanent magnet is a magnetized mixture of resin and magnetic powder.
